Europäisches Patentamt

(19) European Patent Office

Office européen des brevets

(11) Publication number: **0 048 926**
**B1**

(12) **EUROPEAN PATENT SPECIFICATION**

(45) Date of publication of patent specification: **17.07.85**

(21) Application number: **81107508.4**

(22) Date of filing: **22.09.81**

(51) Int. Cl.⁴: **C 11 D 13/18, B 30 B 11/24, B 29 C 47/38**

---

(54) **High efficiency, fast extruders for extruding and refining soap and detergents.**

---

(30) Priority: **30.09.80 IT 2503280**

(43) Date of publication of application:
**07.04.82 Bulletin 82/14**

(45) Publication of the grant of the patent:
**17.07.85 Bulletin 85/29**

(84) Designated Contracting States:
**DE FR GB IT**

(56) References cited:
**DE-A-1 529 762**
**DE-A-1 679 816**
**US-A-3 145 420**
**US-A-4 100 618**
**US-A-4 125 333**

(73) Proprietor: **COSTRUZIONI MECCANICHE G. MAZZONI S.p.A.**
**Viale Trentino 10/12**
**I-21052 Busto Arsizio(Varese) (IT)**

(72) Inventor: **Mazzoni, Aldo F.**
**Via Ippolito Nievo, 3**
**I-21052 Busto Arsizio Varese (IT)**

(74) Representative: **Borella, Ada**
**Ing. A. Racheli & C. Viale San Michele del Carso, 4**
**I-20144 Milan (IT)**

Courier Press, Leamington Spa, England.

## Description

This invention relates to machines referred to as refiners or extruders for use in soap extruding and/or refining operations.

Extrusion and refining of soap is provided by a rotating screw comprised in a static container. The product is compressed and caused to exit from the extruding or refining unit in the form of bar, pellets, string-like elements, etc.

In order to avoid the overheating of the soap, the static container is cooled.

Extruders at present used in continuous extrusion of soap, have as main characteristics a helix rotating at low speed, that is at 10—20 r.p.m., preferably 15 r.p.m.

The winding angle of the helix is 8°—12°.

Its ratio length/diameter is 2.5÷3.5.

The already known helix diameters are in the range of 300÷350 mm.

These machines are very big, which results in considerable cost, substantial overall size and high weight of the machine. The slowly rotating helix suffers from the disadvantages of providing low outputs and requiring massive reduction gears between motor and helix.

This also involves remarkable stay times of the product in the machine, resulting in a much too long mechanical processing time of the product.

The U.S.A. patents 4.125.333 and 3.145.420 refer to extruders for plastic materials which also have the function of heaters and melters.

Soap extruders must be instead conceived in such a way so as to create a strong pressure capable of pushing the material in order to extrude and refine it through the refinement nets, without however letting it reach a high temperature which damages soap.

The transposition to soap of the screw characteristics for plastic was unthinkable at the filing of the present application. In fact the temperature reached with these known screws ranges between 375° and 410°F (ca 190—210°C) (see column 6 U.S.A. patent 4.125.333) or 280°—290°C (column 4 U.S.A. patent 3.145.420).

The German patent application 1.679.816 also refers to plastic materials, but not to an extruder. This is an outlet screw apt to granulate the plastic material. The screws of these three documents therefore are part of another product category.

It is the object of the present invention to overcome the above described disadvantages in the present machines by providing the same production or output with smaller and less expensive machines, thus also obtaining a lower product temperature.

The above specified object has been accomplished by providing an extruder in which the extruding member is fitted with a helix rotating at a speed in the range of between 20 to 50 r.p.m., the winding angle being in the range between 15° and 25° and its length in the range of 5 to 15 times its diameter. The saw diameter is preferably in the range of 100 to 200 mm.

A preferred approach provides that the speed is maintained at about 35 r.p.m., with a diameter of 150 mm and a length of 10 times the diameter.

Preferably, the winding angle of the screw is maintained at 20°.

A particular embodiment further provides that the helix length ranging, between 5 and 15 times the diameter, may be varied within this range, thus correspondingly modifying the stay times for the product within the machine.

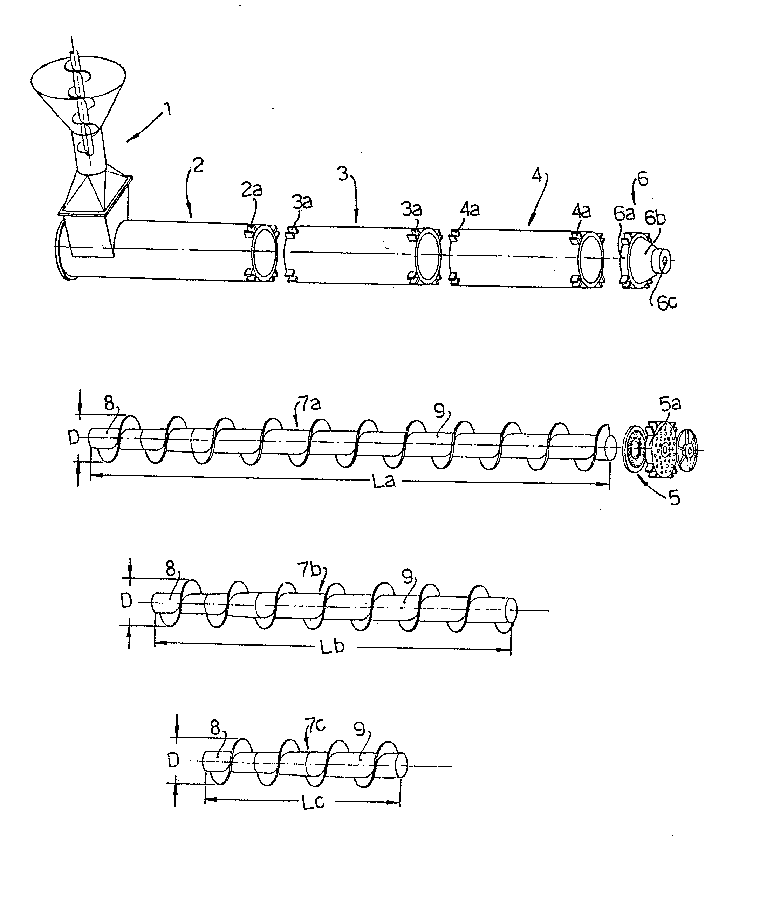

The invention will now be further described with reference to an exemplary embodiment which has been shown in the single figure of the accompanying drawing showing an exploded longitudinal view of an extruder.

An extruder according to the present invention comprises a loading hopper 1, with or without screw feeder, a series of cooled cylinder sections 2, 3 and 4, a refining unit 5 and/or extruding unit 6 heated, a helix 7a, 7b, 7c of different length depending on the number of cylinders used.

The loading hopper 1 is provided also for operating under vacuum.

The cylinder sections 2, 3 and 4 joint together so as to allow the variation of the screw length. The free end 2a of cylinder 2, and both ends 3a and 4a of cylinders 3 and 4, as well as the connecting flange 5a and 6a of the extruding and refined units are provided with members for mutual fastening, so that each helix 7a, 7b, 7c can be inserted therein.

The stay time of the product may vary for each solution.

The product outlet units may be formed of refining units 5 comprising nets and perforated plates and/or bar extruding units 6 comprising a conical connector 6b and an extruding outlet 6c. Both units may be heated.

The helix is provided with a compression portion under the hopper which is also partially inserted in the cylinder, that is an initial length of the helix has a conical core 8 extending under the loading hopper and partly in the cylinder section; in the remaining part of cylinder sections 2, 3 and 4 the helix core 9 has a constant diameter.

As above mentioned, the length La, Lb, Lc of the helix is in any case at least 5 times to 15 times the diameter D, but preferably 10 times said diameter D.

The speed of rotation of the helix ranges between 20 and 50 r.p.m., but preferably about 35 r.p.m.

The winding angle of the helix ranges between 15° and 25° but preferably is 20°.

The depth of the helix thread ranges between 20 to 45 mm, but preferably between 30 and 35 mm.

## Claims

1. An extruder or refiner for soap and detergents comprising a screw for pushing the product, characterized by its high speed of rotation ranging between 20 and 50 r.p.m., its length ranging between 5 to 15 times its diameter, the winding angle of the screw ranging between 15° and 25°.

2. An extruder or refiner as in claim 1, characterized in that the winding angle is 20°.

3. An extruder or refiner as in claim 1, characterized in that the depth of the thread is 30 to 35 mm.

4. An extruder or refiner according to claim 1, characterized in that the screw length is 10 times the diameter.

5. An extruder or refiner according to claim 1, characterized in that the screw speed is 35 r.p.m.

6. An extruder or refiner as in claim 1, characterized in that the screw diameter is 150 mm.

**Patentansprüche**

1. Extruder für Seifen und Detergentien mit einer Schnecke, die den Druck des Erzeugnisses verwirklicht, gekennzeichnet durch eine hohe Drehgeschwindigkeit zwischen 20 und 50 U/min. und einer bedeutenden Länge der Schraube zwischen 5 bis 15 mal ihres Durchmessers, wobei der Schraubenwinkel zwischen 15° und 25° liegt.

2. Extruder nach Anspruch 1, dadurch gekennzeichnet, daß der Wicklungswinkel 20° ist.

3. Extruder nach Anspruch 1, dadurch gekennzeichnet, daß die Tiefe des Gewindes 30 bis 35 mm ist.

4. Extruder nach Anspruch 1, dadurch gekennzeichnet, daß die Länge der Schraube 10 mal dem Durchmesser entspricht.

5. Extruder nach Anspruch 1, dadurch gekennzeichnet, daß die Geschwindigkeit der Schraube 35 U/min ist.

6. Extruder nach Anspruch 1, dadurch gekennzeichnet, daß der Durchmesser der Schraube 150 mm beträgt.

**Revendications**

1. Extrudeuse ou raffineuse pour savon et détergents comprenant une vis opérant la poussée du produit, caractérisée par une grande vitesse de rotation allant de 20 à 50 tours/minute et par une longueur supérieure de l'hélice qui peut être de 5 à 15 fois égale à son diamètre, l'angle de bobinage de la vis étant compris entre 15 et 25°.

2. Extrudeuse selon la revendication 1, caractérisée par le fait que l'angle de bobinage est de 20°.

3. Extrudeuse selon la revendication 1, caractérisée par le fait que la profondeur du filet est de 30 à 35 mm.

4. Extrudeuse selon la revendication 1, caractérisée par le fait que la longueur de la vis est égale à fois son diamètre.

5. Extrudeuse selon la revendication 1, caractérisée par le fait que la vitesse de la vis est de 35 tours/minute.

6. Extrudeuse selon la revendication 1, caractérisée par le fait que le diamètre de la vis est de 150 mm.